# EUROPÄISCHE PATENTSCHRIFT

(11) **EP 1 710 485 B1**
(45) Veröffentlichungstag und Bekanntmachung des Hinweises auf die Patenterteilung: **21.09.2016**
(21) Anmeldenummer: 06007336.8
(22) Anmeldetag: 06.04.2006
(51) Int. Cl.: F16N 11/08

(54) **Selbsttätiger Schmierstoffgeber**
Automatic lubricant dispenser
Distributeur de lubrifiant automatique

(30) Priorität: 18.06.2005 DE 202005009571 U; 08.04.2005 DE 202005005706 U
(43) Veröffentlichungstag der Anmeldung: 11.10.2006
(73) Patentinhaber: WYSSMANN, Max, 3360 Herzogenbuchsee (CH)
(72) Erfinder: WYSSMANN, Max, 3360 Herzogenbuchsee (CH)
(74) Vertreter: Specht, Peter

(56) Entgegenhaltungen:
- DE-A1- 4 330 793
- DE-C- 203 567
- DE-C1- 4 446 463
- US-A- 1 619 779

## Beschreibung

Die Erfindung betrifft einen selbsttätigen Schmierstoffgeber, insbesondere für Führungsbahnen, mit einem Gehäuse, aus dem durch wenigstens einen verfahrbaren Kolben eine Schmierstoffkammer gebildet ist, wobei die Schmierstoffkammer mit einer Schmierstoffaustrittsöffnung versehen ist, und dass zum Verfahren des Kolbens bzw. der Kolben der Schmierstoffgeber mit einem Antriebeselement ausgestattet ist, dass in dem Gehäuse des Schmierstoffgebers mehrere Schmierstoffkammern und eine gleiche Stückzahl von Kolben angeordnet sind, dass die Kolben von dem Antriebeselement direkt oder indirekt verfahrbar sind, und dass an den Schmierstoffaustrittsöffnungen zu den jeweiligen unterschiedlichen Schmierstoffstellen führende Leitungen angeschlossen sind.

Der in Rede stehende Schmierstoffgeber könnte auch als Langzeitschmierstoffgeber bezeichnet werden, da die Schmiermittelkammer und auch das Antriebselement so ausgelegt sind, dass das zu schmierende Objekt über einen Zeitraum von mehreren Monaten ausreichend mit Schmierstoff versorgt wird. Die zu schmierenden Objekte sind überwiegend Führungsbahnen mit einer relativ großen Länge. Durch den Einsatz eines selbsttätigen Schmierstoffgebers werden nicht nur die aufeinander gleitenden Flächen mit einem Schmierstofffilm versehen, sondern es wird außerdem das Eindringen von Staub und Schmutz verhindert. Als Antriebselement kommt eine Gasentwicklungszelle und ein Bewegungskolben in Betracht.

Die bislang bekannten Schmierstoffgeber sind mit einer Schmierstoffkammer, einer Druckmittelkammer und einem von dem Druckmittel beaufschlagbaren Kolben ausgestattet. Diese Baueinheit wird dann an einem längs der Führung verfahrbaren Bauteil befestigt. Ein derartiger Schmierstoffgeber könnte auch als Einzelpunktschmierstoffgeber bezeichnet werden, da immer nur eine einzelne Stelle mit dem Schmierstoff beaufschlagt wird.

Die in Rede stehenden Führungsbahnen sind häufig auch als Lineareinheiten ausgebildet, wobei jede Lineareinheit aus zwei Linearführungen und vier Linearwagen besteht. Auf den Linearwagen wird beispielsweise eine Tischplatte festgelegt. Diese Lineareinheiten sind üblicherweise mit Maschinenteilen verbaut, so dass eine manuelle Schmierung sehr schwierig ist. Aufgrund der Länge solcher Lineareinheiten kommt jedoch auch der Einsatz eines sogenannten Einzelpunktschmierstoffgebers nicht in Betracht.

Aus der US 1,619,779 ist ein Schmierstoffgeber bekannt, bei dem in einem gehäuseartigen Grundträger mehrere Schmierstoffkammern neben- und übereinander angeordnet sind, und bei dem in jeder Schmierstoffkammer ein Kolben verfahrbar angeordnet ist. Jeder Kolben ist an einer gegenüber der Schmierstoffkammer vorstehenden Kolbenstange angeschlossen und diese Kolbenstangen werden von einem gemeinsamen Zahnradantrieb angetrieben. Dazu sind die Kolbenstangen an einem Schubelement in Form eines Tellers befestigt. Über eine Spindel wird dann das Schubelement in beiden Richtungen verfahren.

Durch den mechanischen Antrieb ist dieser Schmierstoffgeber konstruktiv sehr aufwändig und aufgrund der gegenüber den Schmierstoffkammern vorstehenden Kolbenstangen ist der Platzbedarf entsprechend hoch. Eine derartige Konstruktion entspricht nicht mehr den heutigen Anforderungen.

Aus der DE 43 30 793 A1 ist eine Schmiervorrichtung bekannt, bei der ein Schmiermittelbehälter an einem Rahmen befestigt ist. Dieser Schmiermittelbehälter ist mit einem eingepassten und bewegbaren Kolben ausgestattet. An dem Rahmen ist eine Gasgeneratoreinrichtung zur Entwicklung von Gas zum Aufbringen von Druck angeordnet, die eine Schneideinrichtung sowie einen mit einem Elektrolyt imprägnierten Gasgenerator und ferner einen am Rahmen befestigten Deckel aufweist. Ferner ist diese Entwicklung von Gas mit einem Schmiermittelauslass am unteren Ende des Schmiermittelbehälters und einem Steuerkreis zur Stromversorgung des Gasgenerators ausgestattet. Zwischen dem Boden des Gasgenerators und dem oberen Ende des Kolbens ist an dessen Umkehrpunkt ein gegenüber dem sonstigen Raum eingeschlossener Raum vorgesehen mit einer relativ geringen Größe. In diesem Raum bewegt sich der Kolben, um das Schmiermittel durch den Schmiermittelauslass mit Verzögerung ausfließen zu lassen.

Der Kolben ist mit Dichtringen versehen, die ein Austreten von Schmiermittel an der Oberseite verhindern. Ferner ist der mit einem Nocken als Sicherheitseinrichtung ausgestattet, der dann abgesprengt werden kann, wenn der Gasdruck einen vorherbestimmten Grenzwert überschreitet. Die Farbe der Dichtringe ist durch einen transparenten Schmiermittelbehälter sichtbar.

Dieser Schmierstoffgeber ist für eine Mehrzahl von Schmierstellen ungeeignet, da dafür jeweils ein Schmierstoffgeber benötigt wird.

Der Erfindung liegt die Aufgabe zugrunde, einen selbsttätigen Schmierstoffgeber der eingangs näher beschriebenen Art in konstruktiv einfacher Weise zu schaffen, der für relativ lange Führungsbahnen ausgelegt ist und bei dem sichergestellt ist, dass mehrere Schmierstellen mit der gleichen oder annähernd der gleichen Menge von Schmierstoff versorgt werden.

Die gestellte Aufgabe wird gelöst, indem sämtliche druckbeaufschlagbare Kolben mittels eines die Druckmittelkammer begrenzenden elastisch verformbaren Bewegungskolben druckbeaufschlagbar sind

Alle Kolben werden mit einem gleichen oder annähernd gleichen Druck beaufschlagt, so dass sämtliche druckbeaufschlagbare Kolbe mittels des die Druckkammer begrenzenden, elastisch verformbaren Bewegungskolben druckbeaufschlagbar sind.

Aufgrund der unterschiedlichen Lagen der einzelnen Schmierstoffstellen zu dem Gehäuse ergeben sich unterschiedliche Längen für die Leitungen. Trotzdem ist sichergestellt, dass die gleiche oder annähernd die gleiche Menge von Schmierstoff an die jeweilige Schmierstoffstelle gelangt, da jeder Schmierstoffstelle eine eigene Schmierstoffkammer und ein verfahrbarer Kolben zugeordnet ist. Die Schmierstoffkammern und das Antriebselement sind so ausgelegt, dass die Schmierung über einen längeren Zeitraum, beispielsweise von mehreren Monaten, sichergestellt ist. Da alle Schmierstoffkammern und alle Druckkammern in einem gemeinsamen Gehäuse angeordnet sind, ergibt sich eine kompakte sowie konstruktiv einfache und damit kostengünstige Lösung.
Um eine kompakte Baueinheit zu erhalten ist vorgesehen, dass jede Schmierstoffkammer und jeder zugehörige Kolben fluchtend zueinander stehen. Das Antriebselement kann in einer ersten Ausführung als elektromechanischer Antrieb ausgebildet sein, der von einer Spannungsquelle, vorzugsweise einer netzunabhängigen Spannungsquelle mit Energie versorgt wird. Dabei ist es dann noch vorteilhaft, wenn das Antriebeselement innerhalb des Gehäuses des Schmierstoffgebers angeordnet ist und als Gasentwicklungszelle ausgebildet ist, so dass das Gehäuse in eine Druckmittelkammer und in eine Schmierstoffkammer unterteilt ist.

Eine einfache Ausführung ergibt sich, wenn der Bewegungskolben als Membran ausgebildet ist, die mit dem äußeren Rand an der Innenfläche des Gehäuses festgelegt ist.

Bei einer Ausführung, die zur Schmierung einer Lineareinheit ausgelegt ist, die aus zwei parallel und im Abstand zueinander verlaufenden Linearführungen und vier Linearwagen besteht, ist vorgesehen, dass in dem Gehäuse fünf Schmierstoffkammern und fünf Kolben angeordnet ist. Vier Schmierstoffkammern sind dann für die Versorgung der vier Wagen gedacht und die fünfte Schmierstoffkammer ist für die Schmierung einer Gewindespindel zum Antrieb des Systems gedacht. Es ist ferner unabhängig von der Anzahl der Schmierstoffkammern und der Kolben vorgesehen, dass die Mittellängsachsen der Schmierstoffkammern und die Mittellängsachsen der Kolben auf einem Kreisbogen liegen. Die Querschnitte der Schmierstoffkammern und der Kolben können kreisrund oder auch mehreckig in regelmäßiger Ausführung, vorzugsweise in viereckiger Ausführung, sein. Davon abweichend ist es jedoch auch möglich, dass die Querschnitte polygonal gestaltet sind.

Ein polygonaler Querschnitt bietet den Vorteil, dass eine größtmögliche Fläche bei geringsten Abmessungen erreicht wird.

Gemäß einer zweiten Ausführung, bei der in dem Gehäuse eine Schmierstoffkammer vorgesehen ist, ist zur Lösung der gestellten Aufgabe vorgesehen, dass in dem Gehäuse eine zweite Druckmittelkammer und ein zweiter druckbeaufschlagbarer Kolben angeordnet ist, wobei beide Druckmittelkammern vom Gas der Gasentwicklungszelle beaufschlagbar sind. Dadurch können die Drücke in den Druckmittelkammem so gering wie möglich gehalten werden, da die von den Kolben auf das Schmiermittel übertragenen Kräfte sich verdoppeln. Auch bei dieser Ausführung könnten die Querschnitte der Druckmittelkammern und der Kolben kreisförmig, mehreckig in regelmäßiger Ausführung oder polygonal gestaltet sein. Ferner ist bei dieser Ausführung vorgesehen, dass die Mittellängsachsen der Druckmittelkammern fluchtend zueinander verlaufen. Da auch bei dieser Ausführung nur eine Gasentwicklungszelle eingesetzt wird, ist vorgesehen, dass die Druckmittelkammern durch eine Durchströmbohrung oder durch eine Durchströmleitung strömungstechnisch miteinander verbunden sind. Die Durchströmbohrung könnte in der Wandung des Gehäuses angeordnet sein, während bei einer Durchströmleitung ein Röhrchen durch die beiden Kolben gesteckt sein könnte.

Der in Rede stehende Schmierstoffgeber wird bevorzugt zum Schmieren von Führungsbahnen bei Maschinen der verschiedensten Art eingesetzt. Damit der Schmierstoffgeber nach der Entleerung in äußerst einfacher Weise gewechselt werden kann, ist in weiterer Ausgestaltung vorgesehen, dass dieser auswechselbar an einem Adapterstück festgelegt ist. Während bei den bislang bekannten Ausführungen die Leitungen bzw. die Schnellverschlüsse einzeln gelöst werden müssen, kann nunmehr der Schmierstoffgeber von dem Adapterstück heruntergezogen werden und gegen einen gefüllten ausgetauscht werden. Bei einer solchen Ausführung ist der Schmierstoffgeber als Einwegartikel zu sehen. Zweckmäßigerweise enthält das Adapterstück ein Schnappelement und einen Anschraubflansch. Mittels des Anschraubflansches kann das Adapterstück dann an einem Maschinenteil festgelegt werden, während das Schnappelement für eine form- und/oder kraftschlüssige Verbindung mit dem Schmierstoffgeber dient. Das Schnappelement ist zweckmäßigerweise eine geschlitzte Hülse, die am äußeren freien Ende mit einer Wulst versehen ist.

Anhand der beiliegenden Zeichnungen wird die Erfindung noch näher erläutert. Es zeigen:
- Figur 1: das Gehäuse des selbsttätigen Schmierstoffgebers in Schnittdarstellung;
- Figur 2: eine Lineareinheit in Verbindung mit dem Schmierstoffgeber in einer perspektivischen Darstellung;
- Figur 3: eine der Figur 2 entsprechende Darstellung, jedoch als Unteransicht;
- Figur 4: eine zweite Ausführungsform des Schmierstoffgebers in Schnittdarstellung;
- Figur 5: ein Schnitt längs der Linie V-V in der Figur 4, und
- Figur 6: eine der Figur 5 entsprechende Schnittdarstellung, jedoch in einer geänderten Ausführung.

In den Figuren ist der Schmierstoffgeber 10 als Ganzes dargestellt. Im dargestellten Ausführungsbeispiel enthält das Gehäuse eine relativ dünnwandige Gehäusewandung 12. Im Querschnitt ist es kreisringförmig gestaltet. Im dargestellten Ausführungsbeispiel sind innerhalb des Schmierstoffgebers 10 fünf Schmierstoffkammern 13 vorgesehen, die im Betriebszustand mit einem Schmierstoff, beispielsweise Öl oder Fett, gefüllt sind. Das zugeordnete Stirnende des Schmierstoffgebers 10 ist mit fünf Schmierstoffaustrittsöffnungen 14 versehen, an die Leitungen 15 mittels Schnellverschlüsse 16 angeschlossen sind. In dem den Schnellverschlüssen 16 gegenüberliegenden Bereich des Schmierstoffgebers 10 sind Kolben 17 eingesetzt, deren Mittellängsachsen fluchtend zu den Mittellängsachsen der Schmierstoffkammern 13 verlaufen. Im zugehörigen Stirnbereich, das heißt, in dem den Schnellverschlüssen 16 abgewandt liegenden Bereich des Schmierstoffgebers 10 ist eine Gasentwicklungszelle 18 eingesetzt. Das erzeugte Gas strömt in eine Druckmittelkammer 19 ein. Diese wird von einem Bewegungskolben 20 in Form einer Membran gebildet, deren äußerer Rand an der Innenfläche des Gehäuses des Schmierstoffgebers 10 festgelegt ist. Durch den Druck innerhalb der Druckmittelkammer 19 verformt sich der Bewegungskolben 20 entsprechend der Entleerung der Schmierstoffkammern 13. Durch den Bewegungskolben 20 wird bei geringstmöglicher Menge von zu erzeugendem Gas ein gleichmäßiger, entsprechend hoher Druck auf die Stirnflächen der Kolben 17 ausgeübt. Der Bewegungskolben 20 verhindert, dass in die Räume zwischen den Kolben 17 noch Gas eindringt.

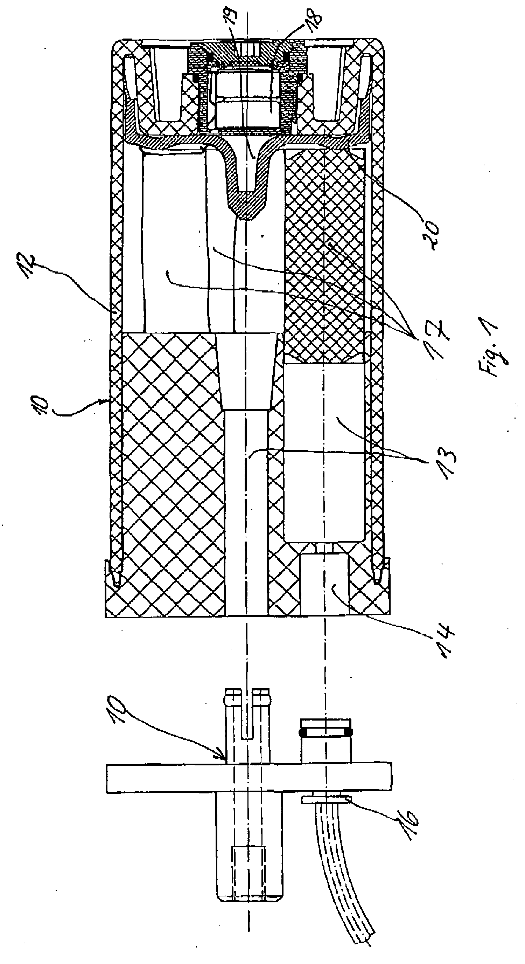

Die Figur 1 zeigt ferner, dass der Schmierstoffgeber 10 an einem Adapterstück 11 auswechselbar festgelegt ist. Dieses Adapterstück 11 enthält einen Anschraubflansch und ein Schnappelement, welches aus einer geschlitzten Hülse besteht, damit sie verformbar ist. Zur form- und/oder kraftschlüssigen Festlegung des Schmierstoffgebers 10 ist der äußere Endbereich des Schnappelementes mit einer Wulst versehen, die eine entsprechende Nut des Schmierstoffgebers 10 hintergreift. Durch Aufbringung einer Zugkraft auf den Schmierstoffgeber 10 kann dieser von dem Adapterstück 11 heruntergezogen werden. Der Anschraubflansch 10 kann beispielsweise an einem Maschinenteil angeschraubt werden. Dadurch wird die Handhabung erleichtert.

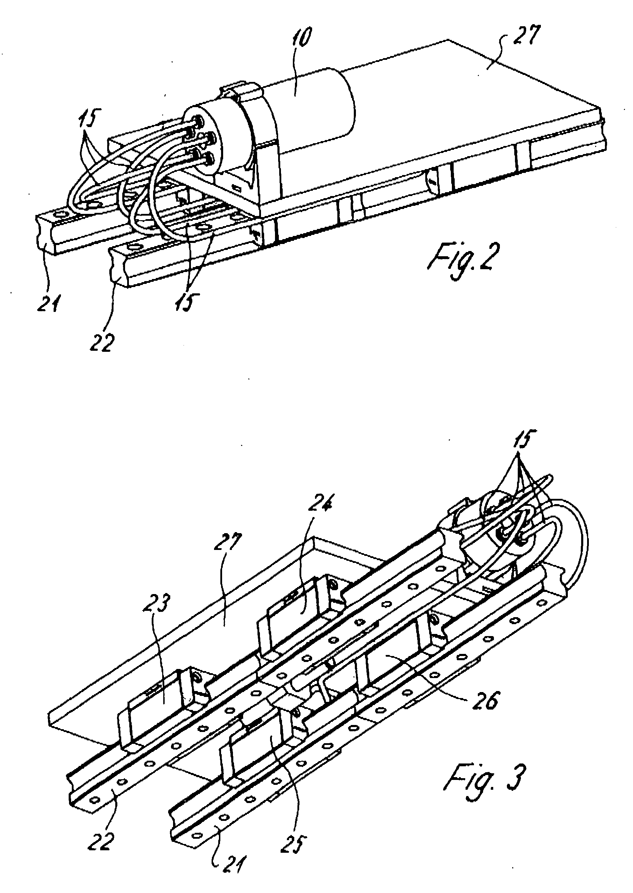

Die Figuren 2 und 3 zeigen den Schmierstoffgeber 10 in Verbindung mit einer Lineareinheit. Diese besteht aus den beiden parallel und im Abstand zueinander verlaufenden Linearführungen 21, 22 in Form von Führungsschienen. Auf die Linearführungen 21, 22 sind vier Linearwagen 23, 24, 25, 26 aufgesetzt. Die Leitungen 15 führen zu unterschiedlichen Stellen, nämlich zu den Linearwagen 23, 24, 25, 26 und eine fünfte Leitung 15 zu einer nicht dargestellten Spindel. Die Lineareinheit ist beispielhaft zu sehen, da grundsätzlich der Schmierstoffgeber 10 für sämtliche Führungen verwendet werden kann. Auf die Linearwagen 23, 24, 25, 26 ist im dargestellten Ausführungsbeispiel eine Tisch- oder Arbeitsplatte 27 aufgesetzt. Es ergibt sich insbesondere aus der in der Figur 2 dargestellten Funktionsstellung, dass die Schmierung der Linearwagen 23, 24, 25, 26 in manueller Weise mit einer Fettpresse oder einer Ölkanne äußerst umständlich ist, da die entsprechenden Stellen schlecht zugänglich sind.

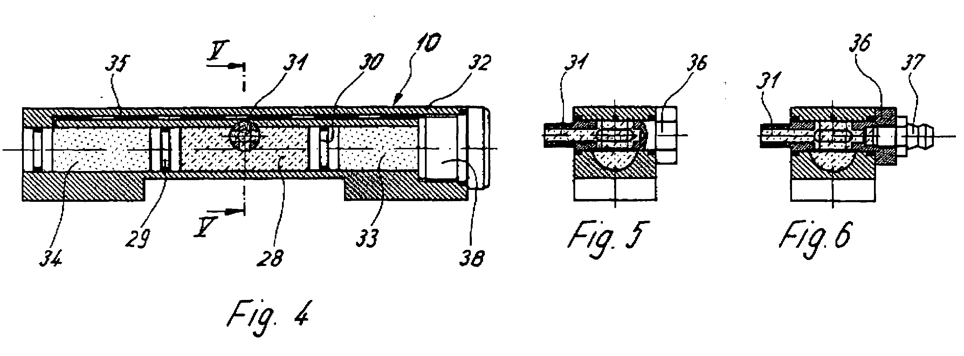

Die Figur 4 zeigt eine Ausführung eines Schmierstoffgebers 10, der mit einer Schmiermittelkammer 28 und zwei fluchtend zueinander stehenden Kolben 29, 30 ausgestattet ist, die auf das in die Schmiermittelkammer 28 eingefüllte Schmiermittel einen solchen Druck ausüben, dass durch eine Schmiermittelaustrittsöffnung 31 hindurch das Schmiermittel herausgedrückt wird. Die Kammern 28 sind in einem rohrförmigen Gehäuse 32 angeordnet, welches entweder einen kreisringförmigen oder einen viereckigen, vorzugsweise einen quadratischen Querschnitt aufweist. In das in der Darstellung nach der Figur 4 rechte Stirnende des Gehäuses 32 ist eine Gasentwicklungszelle 38 eingesetzt. Von dort aus strömt das Gas in die beiden Druckmittelkammern 33, 34, die über eine Bohrung 35 in der Wandung des Gehäuses 32 strömungstechnisch miteinander verbunden sind.

Die Figur 5 zeigt, dass der Schmierstoffgeber 10 mittels einer Schraube 36 an einem Bauteil befestigt werden kann.

Die Figur 6 zeigt, dass das Schmiermittel in die Schmiermittelkammer 28 mittels einer Fett- oder Ölpresse eingebracht werden kann, da die Schraube 36 mit einer durchgehenden Bohrung versehen ist, in die ein Schmiernippel 37 eingesetzt ist.

Entgegen der dargestellten Ausführung könnte anstelle der Gasentwicklungszelle 18 ein elektromechanischer Antrieb eingesetzt werden, der in bevorzugter Ausführung von einer netzunabhängigen Spannungsquelle mit Energie versorgt wird, beispielsweise aus einer Batterie oder einem Akkumulator.

Die Erfindung ist nicht auf das dargestellte Ausführungsbeispiel beschränkt. Wesentlich ist, dass in einem Gehäuse des Schmierstoffgebers 10 mehrere Schmierstoffkammern 13 und eine entsprechende Anzahl von Kolben 17 vorgesehen sind, die gleichmäßig durch ein von einer Gasentwicklungszelle 18 erzeugtes Gas druckbeaufschlagt sind, und dass in die Schmierstoffaustrittsöffnungen 14 Leitungen 15 eingesetzt sind, die bis in die zu schmierenden Stellen reichen, so dass trotz unterschiedlicher Längen eine gleichbleibende Schmiermittelmenge aus dem Schmierstoffgeber 10 herausgefördert wird.

### Bezugszeichen

- 10: Schmierstoffgeber
- 11: Adapter
- 12: Gehäusewandung
- 13: Schmierstoffkammern
- 14: Schmierstoffaustrittsöffnungen
- 15: Leitungen
- 16: Schnellverschlüsse
- 17: Kolben
- 18: Gasentwicklungszelle
- 19: Druckmittelkammer
- 20: Bewegungskolben
- 21,22: Linearführungen
- 23 - 26: Linearwagen
- 27: Tisch-/Arbeitsplatte
- 28: Schmiermittelkammer
- 29, 30: Kolben
- 31: Schmiermittelaustrittsöffnung
- 32: Gehäuse
- 33, 34: Druckmittelhammern
- 35: Bohrung
- 36: Schraube
- 37: Schmiemippel
- 38: Gasentwicklungszelle

## Patentansprüche

1. Selbsttätiger Schmierstoffgeber (10), insbesondere für Führungsbahnen (21 - 26), mit einem Gehäuse, aus dem durch wenigstens einen verfahrbaren Kolben (17, 29, 30) eine Schmierstoffkammer (13) gebildet ist, wobei die Schmierstoffkammer (13) mit einer Schmierstoffaustrittsöffnung (14) versehen ist, dass zum Verfahren des Kolbens bzw. der Kolben der Schmierstoffgeber (10) mit einem Antriebselement ausgestattet ist, dass in dem Gehäuse des Schmierstoffgebers (10) mehrere Schmierstoffkammern (13) und eine gleiche Stückzahl von Kolben (17) angeordnet sind, dass die Kolben (17) von dem Antriebeselement (18) direkt oder indirekt verfahrbar sind, und dass an den Schmierstoffaustrittsöffnungen (14) zu den jeweiligen unterschiedlichen Schmierstoffstellen führende Leitungen (15) angeschlossen sind, **dadurch gekennzeichnet, dass** sämtliche druckbeaufschlagbare Kolben (17) mittels eines die Druckmittelkammer (19) begrenzenden elastisch verformbaren Bewegungskolben (20) druckbeaufschlagbar sind.

2. Selbsttätiger Schmierstoffgeber nach Anspruch 1, **dadurch gekennzeichnet, dass** jede Schmierstoffkammer (13) und jeder zugehörige Kolben (17) fluchtend zueinander stehen.

3. Selbsttätiger Schmierstoffgeber nach Anspruch 1, **dadurch gekennzeichnet, dass** das Antriebeselement als elektromechanischer Antrieb ausgebildet ist, der von einer Spannungsquelle, vorzugsweise einer netzunabhängigen Spannungsquelle, mit Energie versorgbar ist.

4. Selbsttätiger Schmierstoffgeber nach Anspruch 1, **dadurch gekennzeichnet, dass** das Antriebeselement eine innerhalb des Gehäuses des Schmierstoffgebers (10) angeordnete Gasentwicklungszelle (18) ist, und dass das Gehäuse (32) in eine Druckmittekammer (19) und in die Schmierstoffkammer (13) unterteilt ist.

5. Selbsttätiger Schmierstoffgeber nach Anspruch 1, **dadurch gekennzeichnet, dass** der Bewegungskolben (20) als Membran ausgebildet ist, die mit dem äußeren Rand an der Innenfläche des Gehäuses des Schmierstoffgebers (10) festgelegt ist.

6. Selbsttätiger Schmierstoffgeber nach Anspruch 1 für aus zwei parallel und im Abstand zueinander verlaufenden Linearführungen (21, 22) und vier Linearwagen (23, 24, 25, 26), **dadurch gekennzeichnet, dass** in dem Gehäuse des Schmierstoffgebers (10) fünf Schmierstoffkammern (13) und fünf Kolben (17) angeordnet sind.

7. Selbsttätiger Schmierstoffgeber nach einem oder mehreren der vorhergehenden Ansprüche 1 bis 6, **dadurch gekennzeichnet, dass** die Mittellängsachsen der Schmierstoffkammern (13) und die Mittellängsachsen der Kolben (17) auf einem Kreisbogen liegen.

8. Selbsttätiger Schmierstoffgeber nach einem oder mehreren der vorhergehenden Ansprüche 1 bis 7, **dadurch gekennzeichnet, dass** die Querschnitte der Schmierstoffkammern (13) und der Kolben (17) kreisförmig, mehreckig in regelmäßiger Ausführung oder polygonal gestaltet sind.

9. Selbsttätiger Schmierstoffgeber gemäß dem Oberbegriff des Anspruches 1, **gekennzeichnet durch** eine zweite Druckmittelkammer (33 oder 34) und einen zweiten druckbeaufschlagbaren Kolben (29 oder 30), wobei beide Druckmittelkammern (33, 34) von einer gemeinsamen Gasentwicklungszelle (38) beaufschlagbar sind.

10. Selbsttätiger Schmierstoffgeber nach Anspruch 9, **dadurch gekennzeichnet, dass** die Druckmittelkammern (33, 34) durch eine Durchströmbohrung (35) oder durch eine Durchströmleitung strömungstechnisch verbunden sind.

11. Selbsttätiger Schmierstoffgeber nach Anspruch 9, **dadurch gekennzeichnet, dass** die Schmiermittelaustrittsöffnung (31) quer zur Bewegungsrichtung der Kolben (29, 30) verlaufen.

12. Selbsttätiger Schmierstoffgeber nach Anspruch 11, **dadurch gekennzeichnet, dass** die Schmiermittelaustrittsöffnung (31) mittig zwischen den Kolben (29, 30) liegt.

13. Selbsttätiger Schmierstoffgeber nach einem oder mehreren der vorhergehenden Ansprüche 1 bis 12, **dadurch gekennzeichnet, dass** der Schmierstoffgeber (10) auswechselbar an einem Adapterstück (11) festgelegt ist.

14. Selbsttätiger Schmierstoffgeber nach Anspruch 13, **dadurch gekennzeichnet, dass** das Adapterstück (11) ein Schnappelement und einen Anschraubflansch aufweist.

15. Selbsttätiger Schmierstoffgeber nach Anspruch 14, **dadurch gekennzeichnet, dass** das Schnappelement aus einer geschlitzten Hülse besteht, die im freien Endbereich außenseitig mit einer Wulst versehen ist.

## Claims

1. An automatic lubricant dispenser (10), in particular for guide tracks (21-26), having a housing, from which a lubricant chamber (13) is formed by at least one movable piston (17, 29, 30), wherein the lubricant chamber (13) is provided with a lubricant outlet opening (14), the lubricant dispenser (10) is equipped with a drive element for moving the piston or the pistons, multiple lubricant chambers (13) and an equal number of pistons (17) are arranged in the housing of the lubricant dispenser (10), the pistons (17) are movable directly or indirectly by the drive element (18), and lines (15) leading to the respective different lubrication points are connected to the lubricant outlet openings (14), **characterized in that** all pistons (17), to which pressure can be applied, can have pressure applied to them by means of an elastically deformable movement piston (20), which delimits the hydraulic medium chamber (19).

2. The automatic lubricant dispenser according to Claim 1, **characterized in that** each lubricant chamber (13) and each associated piston (17) are aligned with one another.

3. The automatic lubricant dispenser according to Claim 1, **characterized in that** the drive element is designed as an electromechanical drive, which can be supplied with energy by a voltage source, preferably a grid-independent voltage source.

4. The automatic lubricant dispenser according to Claim 1, **characterized in that** the drive element is a gas generation cell (18) arranged inside the housing of the lubricant dispenser (10), and the housing (32) is divided into a hydraulic medium chamber (19) and the lubricant chamber (13).

5. The automatic lubricant dispenser according to Claim 1, **characterized in that** the movement piston (20) is designed as a membrane, which is fixed using the outer edge on the inner surface of the housing of the lubricant dispenser (10).

6. The automatic lubricant dispenser according to Claim 1 for two linear guides (21, 22), which extend in parallel to and at a distance from one another, and four linear carriages (23, 24, 25, 26), **characterized in that** five lubricant chambers (13) and five pistons (17) are arranged in the housing of the lubricant dispenser (10).

7. The automatic lubricant dispenser according to one or more of preceding Claims 1 to 6, **characterized in that** the central longitudinal axes of the lubricant chambers (13) and the central longitudinal axes of the pistons (17) are located on a circular arc.

8. The automatic lubricant dispenser according to one or more of preceding Claims 1 to 7, **characterized in that** the cross sections of the lubricant chambers (13) and the pistons (17) are designed as circular, polygonal in regular embodiment, or polygonal.

9. The automatic lubricant dispenser according to the preamble of Claim 1, **characterized by** a second hydraulic medium chamber (33 or 34) and a second piston (29 or 30) to which pressure can be applied, wherein a shared gas generation cell (38) can be applied to both hydraulic medium chambers (33, 34).

10. The automatic lubricant dispenser according to Claim 9, **characterized in that** the hydraulic medium chambers (33, 34) are fluidically connected by a through flow borehole (35) or by a through flow line.

11. The automatic lubricant dispenser according to Claim 9, **characterized in that** the lubricant outlet opening (31) extends transversely in relation to the movement direction of the pistons (29, 30).

12. The automatic lubricant dispenser according to Claim 11, **characterized in that** the lubricant outlet opening (31) is located centrally between the pistons (29, 30).

13. The automatic lubricant dispenser according to one or more of preceding Claims 1 to 12, **characterized in that** the lubricant dispenser (10) is replaceably fixed on an adapter part (11).

14. The automatic lubricant dispenser according to Claim 13, **characterized in that** the adapter part (11) has a snap element and a screw-on flange.

15. The automatic lubricant dispenser according to Claim 14, **characterized in that** the snap element consists of a slotted sleeve, which is provided on the outer side with a bead in the free end region.

## Revendications

1. Distributeur automatique de lubrifiant (10), en particulier pour des pistes de guidage (21-26), avec un boîtier à partir duquel au moins un piston de vérin (17, 29, 30) forme un compartiment à lubrifiant (13), lequel compartiment à lubrifiant (13) est muni d'une ouverture de sortie de lubrifiant (14), le distributeur de lubrifiant (10) étant muni d'un élément d'entraînement pour déplacer le ou les pistons, plusieurs compartiments à lubrifiant (13) et un nombre égal de pistons (17) étant disposés dans le boîtier du distributeur de lubrifiant (10), les pistons (17) pouvant être déplacés directement ou indirectement par l'élément d'entraînement (18) et des conduites (15) menant aux différents points à lubrifier étant raccordées aux ouvertures de sortie de lubrifiant (14), **caractérisé en ce que** tous les pistons (17) pouvant être soumis à une pression peuvent être soumis à une pression au moyen d'un piston de vérin (20) capable de déformation élastique qui délimite le compartiment à fluide sous pression (19).

2. Distributeur automatique de lubrifiant selon la revendication 1, **caractérisé en ce que** chaque compartiment à lubrifiant (13) et chaque piston (17) correspondant se trouvent dans l'alignement l'un de l'autre.

3. Distributeur automatique de lubrifiant selon la revendication 1, **caractérisé en ce que** l'élément d'entraînement est conformé comme un entraînement électromécanique qui peut être alimenté en énergie par une source de tension, de préférence une source de tension indépendante du secteur.

4. Distributeur automatique de lubrifiant selon la revendication 1, **caractérisé en ce que** l'élément d'entraînement est une cellule génératrice de gaz (18) disposée à l'intérieur du boîtier du distributeur de lubrifiant (10) et **en ce que** le boîtier (32) est partagé en un compartiment à fluide sous pression (19) et le compartiment à lubrifiant (13).

5. Distributeur automatique de lubrifiant selon la revendication 1, **caractérisé en ce que** le piston de vérin (20) est conformé comme une membrane qui est fixée par le bord extérieur à la surface intérieure du boîtier du distributeur de lubrifiant (10).

6. Distributeur automatique de lubrifiant selon la revendication 1 pour deux guides linéaires (21, 22) placés à distance et parallèlement l'un à l'autre et quatre chariots linéaires (23, 24, 25, 26), **caractérisé en ce que** cinq compartiments à lubrifiant (13) et cinq pistons (17) sont disposés dans le boîtier du distributeur de lubrifiant (10).

7. Distributeur automatique de lubrifiant selon une ou plusieurs des revendications 1 à 6, **caractérisé en ce que** les axes longitudinaux médians des compartiments à lubrifiant (13) et les axes longitudinaux médians des pistons (17) sont disposés sur un arc de cercle.

8. Distributeur automatique de lubrifiant selon une ou plusieurs des revendications 1 à 7, **caractérisé en ce que** les sections des compartiments à lubrifiant (13) et des pistons (17) sont de forme circulaire, polyédrique régulière ou polygonale.

9. Distributeur automatique de lubrifiant selon le préambule de la revendication 1, **caractérisé en ce qu'**il comporte un deuxième compartiment à fluide sous pression (33 ou 34) et un deuxième piston pouvant être soumis à une pression (29 ou 30), les deux compartiments à fluide sous pression (33, 34) pouvant être soumis à l'action d'une cellule génératrice de gaz (38) commune.

10. Distributeur automatique de lubrifiant selon la revendication 9, **caractérisé en ce que** les compartiments à fluide sous pression (33, 34) sont reliés du point de vue de la technique hydraulique par un alésage d'écoulement (35) ou par une conduite d'écoulement.

11. Distributeur automatique de lubrifiant selon la revendication 9, **caractérisé en ce que** l'ouverture de sortie de lubrifiant (31) est orientée perpendiculairement au sens déplacement des pistons (29, 30).

12. Distributeur automatique de lubrifiant selon la revendication 11, **caractérisé en ce que** l'ouverture de sortie de lubrifiant (31) est centrée entre les pistons (29, 30).

13. Distributeur automatique de lubrifiant selon une ou plusieurs des revendications 1 à 12, **caractérisé en ce que** le distributeur de lubrifiant (10) est fixé sur un adaptateur (11) de façon interchangeable.

14. Distributeur automatique de lubrifiant selon la revendication 13, **caractérisé en ce que** l'adaptateur (11) présente un élément d'enclenchement et une bride de vissage.

15. Distributeur automatique de lubrifiant selon la revendication 14, **caractérisé en ce que** l'élément d'enclenchement se compose d'une douille fendue qui est munie d'un bourrelet sur l'extérieur de sa partie d'extrémité libre.
